# EUROPÄISCHE PATENTSCHRIFT

(11) **EP 2 794 997 B1**
(45) Veröffentlichungstag und Bekanntmachung des Hinweises auf die Patenterteilung: **09.03.2016**
(21) Anmeldenummer: 12809619.5
(22) Anmeldetag: 21.12.2012
(51) Int. Cl.: E01F 7/04, F16F 7/12

(54) **SCHUTZVERBAUUNG**
Protection structure
Structure de protection

(30) Priorität: 22.12.2011 EP 11010075; 04.10.2012 EP 12006889
(43) Veröffentlichungstag der Anmeldung: 29.10.2014
(73) Patentinhaber: Trumer Schutzbauten GesmbH, 5110 Oberndorf b. Salzburg (AT)
(72) Erfinder: STELZER, Gernot, A-5431 Kuchl (AT); JÄGER, Daniel, A-5162 Obertrum (AT)
(74) Vertreter: Hoefer & Partner Patentanwälte mbB
(86) Internationale Anmeldenummer: PCT/EP2012/005354
(87) Internationale Veröffentlichungsnummer: WO 2013/091893

(56) Entgegenhaltungen:
- WO-A1-02/087931
- JP-A- 2001 248 117
- US-A- 5 487 562

## Beschreibung

Die Erfindung betrifft eine Schutzverbauung gemäß Anspruch 1.

Eine gattungsgemäße Vorrichtung ist aus der JP 2001 248 117 A bekannt. Eine weitere Vorrichtung ist aus der WO 2009/137951 bekannt und ist als Vorrichtung zur Stoßdämpfung von Seilkonstruktionen, insbesondere für Steinschlag-, Murgang- und Schneeverbauungen ausgebildet und absorbiert in ein auf Zug beanspruchtes Seil eingebrachte Energie dadurch, dass ein durch Zugkräfte deformierbares Zwischenstück, welches in ein auf Zug beanspruchtes Seil eingebaut ist, ein oder mehrere Längselemente aufweist. Hierbei steht das mindestens eine Längselement einerseits mit seinem einen Ende in Verbindung mit einem Seilende und andererseits wird es um ein mit einem anderen Seilende verbundenes Umlenkelement geführt. Schließlich sind Mittel vorgesehen, durch welche der gebildete Umlenkwinkel des oder der Längselemente bei der Belastung des Zwischenstücks im Wesentlichen aufrechterhalten bleibt.

Der Nachteil dieser bekannten Vorrichtung ist zunächst in einem relativ hohen baulichen Aufwand zu sehen, der vor allem darin begründet ist, dass zur Energieaufnahme eine Umbiegung bzw. Umlenkung des Zwischenstückes über das Umlenkelement erfolgt, wobei zur Aufrechterhaltung des Umlenkwinkels eine besondere Vorrichtung vorgesehen sein muss, die beispielsweise aus zwei Führungszapfen bestehen kann. Des Weiteren haben im Rahmen der Erfindung durchgeführte Untersuchungen ergeben, dass trotz des Zieles der gattungsgemäßen Druckschrift, den Stoß-Dämpfungsverlauf besser zu definieren bzw. zu optimieren hier weiterer Verbesserungsbedarf insbesondere beim Eintrag hoher Lasten in das Seil gegeben ist.

Aus der US 5 487 562 A ist eine Energieabsorbierungsvorrichtung mit einem deformierbarem Streifen mit vorgefertigten Vorsprüngen bekannt, die in Gurtrückhaltesysteme von Motorfahrzeugen einbaubar ist.

Es ist daher Aufgabe der vorliegenden Erfindung, eine Schutzverbauung gemäß dem Oberbegriff des Anspruches 1 zu schaffen, bei der eine zumindestens weitgehend lineare Energieaufnahme der in das Seil eingebrachten Lasten gewährleistet ist.

Die Lösung dieser Aufgabe erfolgt durch die Merkmale des Anspruches 1. Die Unteransprüche haben vorteilhafte Weiterbildungen der Erfindung zum Inhalt.

Bei der erfindungsgemäßen Schutzverbauung ist eine Verformungseinrichtung vorgesehen, die mit einem Materialstreifen derart zusammenwirkt, dass dieser Materialstreifen beim Aufbringen einer Zugkraft auf das Seil, mit dem der Materialstreifen verbunden ist, geradlinig durch die Verformungseinrichtung hindurchführbar ist und dabei zur Energieaufnahme verformt wird. Das geradlinige Hindurchführen bedeutet erfindungsgemäß, dass, im Gegensatz zum gattungsgemäßen Stand der Technik, keine Umbiegung oder Umlenkung des Materialstreifens erfolgt, da die erfindungsgemäße Verformungseinrichtung derart aufgebaut ist, dass eine Energieaufnahme trotz des Vermeidens einer derartigen Umlenkung bzw. Umbiegung möglich ist.

Die erfindungsgemäße Schutzverbauung basiert auf dem Konzept, trotz der Vermeidung einer Umlenkung des Materialstreifens, die zu den eingangs aufgeführten technischen Problemen führt, eine Energieaufnahme dadurch möglich zu machen, dass ein mit einem Profil versehener Materialstreifen durch die Verformungseinrichtung abgeplattet wird. Alternativ wäre es auch möglich, dass ein ebener, also unprofilierter Materialstreifen durch die Verformungseinrichtung mit einem Profil versehen wird, was durch Reibungsaufbringung und einer plastischen Verformung die nötige Energieaufnahme zur Abbremsung bzw. Stoßdämpfung des Seiles ergibt.

Als Profilierungen für den Materialstreifen sind vom Prinzip her jedwede Art von Profilen denkbar, wie beispielsweise L-, U-, V- oder auch O-Profile.

Dementsprechend ist auch eine Umformung eines ebenen Materialstreifens in diese Profile denkbar, da auch bei dieser Art der Verformung die erforderliche Energieaufnahme sichergestellt ist.

Zu den weiteren Vorteilen der Erfindung zählt der Umstand, dass die bauliche Ausgestaltung der erfindungsgemäßen Vorrichtung einfacher ausgeführt werden kann, da beispielsweise keine Einrichtungen zur Aufrechterhaltung eines Umlenkwinkels erforderlich sind, da der Materialstreifen eben geradlinig und damit umlenkungsfrei durch die Verformungseinrichtung hindurchgeführt bzw. vom Seil bei Aufbringung einer Zugkraft hindurchgezogen wird.

Ferner ist es vorteilhafterweise möglich, durch Einstellung eines Verformungsspaltes zwischen Verformungselementen den gewünschten Grad der Umformung bei dem geradlinigen Hindurchziehen des Materialstreifens einzustellen, wobei es beispielsweise auch möglich ist, zur Energieaufnahme den Materialstreifen auch nur in seinem Querschnitt oder auch nur in seiner Höhe und/oder Breite zu verringern, wozu im einfachsten Fall lediglich zwei einen entsprechend eingestellten Verformungsspalt begrenzende feststehende Verformungszylinder oder auch drehbare Verformungszylinder erforderlich sind.

Die erfindungsgemäße Schutzverbauung kann gegen Steinschlag, Holzschlag, Lawinen oder Ähnlichem (wie z. B. auch als Fangzaun von Autorennstrecken), eingesetzt werden

Eine derartige Schutzverbauung weist üblicherweise eine Stützstruktur auf, die je nach Verbaulänge eine Mehrzahl beabstandeter, an einem Hang fixierbarer, Stützen umfasst. An den Stützen ist ein Netz, das vorzugsweise mit einer Geflechtsauflage versehen sein kann, befestigt. Hierfür ist ein oberes und ein unteres Tragseil vorgesehen. Das obere Tragseil führt das Netz im Bereich von Stützenköpfen der Stützen und das untere Tragseil führt das Netz im Bereich des Stützenfußes. Seitlich des Netzes sind die oberen und unteren Tragseile über Felsanker im Untergrund befestigt, wobei in diesem Bereich sowie vorzugsweise auch im Bereich des Netzes, die erfindungsgemäßen Energiedissipationsvorrichtungen vorgesehen sein können. Vom Prinzip her ist es auch möglich, als Stützstruktur nur ein Seil oder mehrere Seile zu verwenden, das bzw. die das Netz aufspannt/aufspannen.

Bei einer besonders bevorzugten Ausführungsform sind zwischen dem oberen Tragseil und dem unteren Tragseil ein oder mehrere Mittelseile vorhanden, die mit dem Netz, beispielsweise durch ein Hindurchschlaufen, verbunden sein können. Die Verbindung kann hierbei über die gesamte Verbaulänge durchgängig erfolgen oder im Bereich des Verlaufes der Mittelseile über die Träger der Stützstruktur ausgelassen sein, wobei also dann die beispielhaft genannte Durchschlaufung in diesen Bereichen nicht erfolgt.

Die Mittelseile verlaufen über die gesamte Verbaulänge und werden ebenfalls seitlich der äußersten Träger der Schutzverbauung im Untergrund fixiert, wobei hier wiederum vorzugsweise Felsanker vorgesehen sein können, in deren Bereich Energiedissipationvorrichtungen bzw. Seilbremsen vorgesehen sein können, die entsprechend den Prinzipien vorliegender Erfindung ausgebildet sind.

Weitere Einzelheiten, Merkmale und Vorteile der Erfindung ergeben sich aus nachfolgender Beschreibung von Ausführungsbeispielen anhand der Zeichnung.

### Es zeigt:

- Fig.1: eine schematisch vereinfachte Seitenansicht einer erfindungsgemäßen Schutzverbauung,
- Fig. 1A und 1B: Darstellungen einer ersten Ausführungsform der erfindungsgemäßen Vorrichtung,
- Fig. 2A und 2B: Darstellungen einer zweiten Ausführungsform,
- Fig. 3A und 3B: Darstellungen einer dritten Ausführungsform der erfindungsgemäßen Vorrichtung,
- Fig. 4A und 4B: Darstellungen entsprechend den Fig. 2A und 2B einer vierten Ausführungsform der erfindungsgemäßen Vorrichtung, und
- Fig. 5A und 5B: eine der Fig. 2A und 2B entsprechende Darstellung einer fünften Ausführungsform der erfindungsgemäßen Vorrichtung.

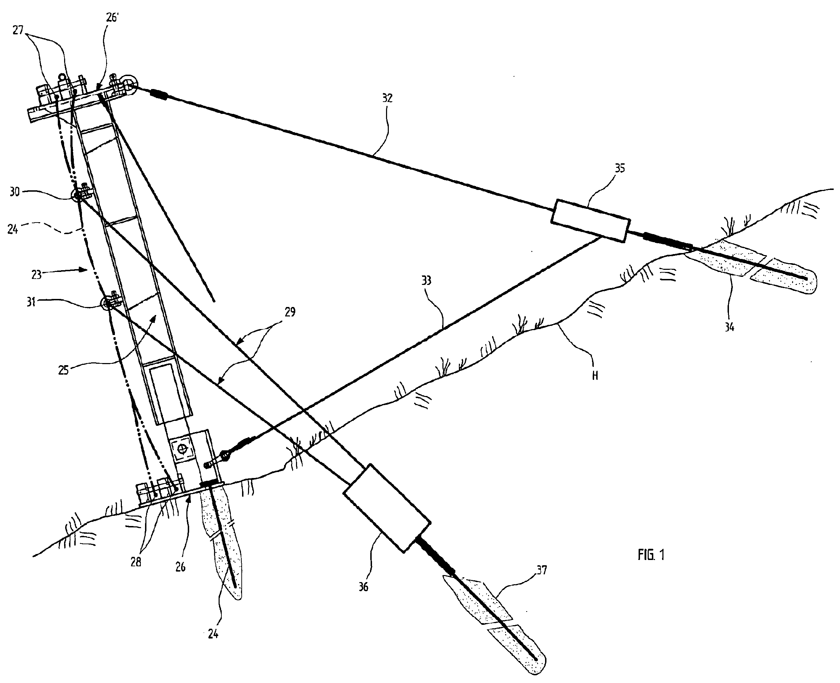

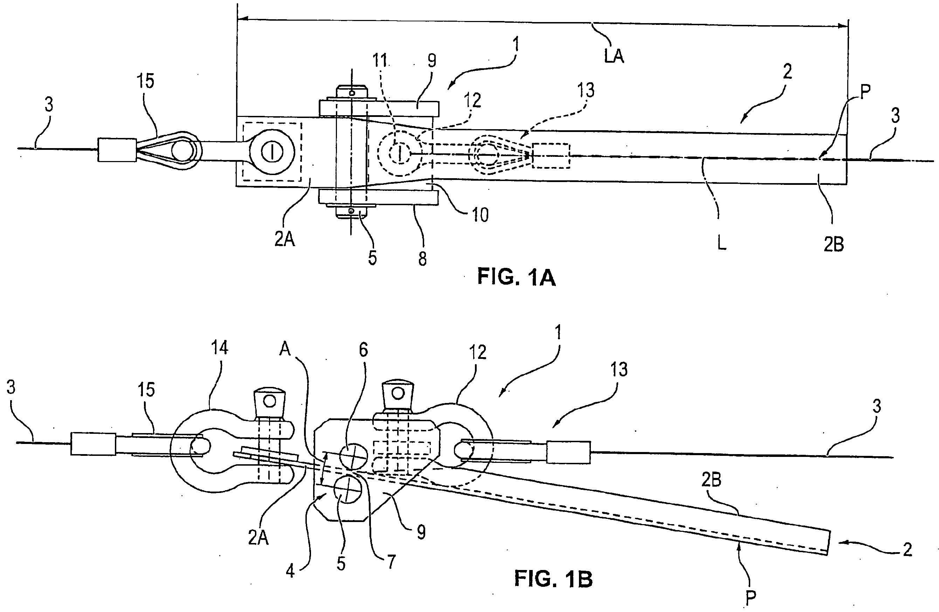

In Fig. 1 ist schematisch vereinfacht eine erfindungsgemäße Schutzverbauung 23 dargestellt, wobei Fig. 1 eine Seitendarstellung zeigt.

Die Schutzverbauung 23 weist eine sog. Stützstruktur auf, die in der Regel von einer Mehrzahl von Trägern gebildet wird, die beispielsweise über Felsanker 24 im Grund eines Hanges fixiert werden können. Je nach Verbaulänge der Schutzverbauung 23 sind eine Mehrzahl derartiger Träger vorgesehen, die in wählbaren Abständen zueinander nebeneinander am Hang H positioniert werden können. Vom Prinzip her ist es auch möglich, dass lediglich ein derartiger Träger oder nur eine Seilandordnung vorgesehen ist.

Die Schutzverbauung 23 weist ferner ein Netz 24 auf, das im Bereich eines Stützenkopfes 26' der in Fig. 1 sichtbaren Stütze 25 über eine Tragseilanordnung 27 geführt ist, wobei es möglich ist, dass die Tragseilanordnung 27 entweder ein oder zwei obere Tragseile umfasst.

Im Bereich des Stützenfußes 26 der Stützen 25 ist eine untere Tragseilanordnung 28 vorgesehen, die wiederum aus einem oder zwei Tragseilen aufgebaut sein kann.

Zwischen der oberen Tragseilanordnung 27 und der unteren Tragseilanordnung 28 ist im dargestellten, besonders bevorzugten Beispielsfall, eine Mittelseilanordnung 29 vorgesehen. Diese Seilanordnung 29 kann ein oder mehrere Mittelseile aufweisen, die über Führungseinrichtungen 30 bzw. 31 am Träger 25 geführt sein können. Die Führungseinrichtungen 30 und 31 können hierbei beispielsweise als Schäkel ausgebildet sein.

Ferner verdeutlicht die Ausführungsform der Schutzverbauung 23 gemäß Fig. 1, dass ein oberes Abspannseil 32 und ein unteres Abspannseil 33 vorgesehen sind. Das obere Abspannseil 32 hält den Stützenkopf der Stütze 25 über eine Befestigungseinrichtung 34 (Felsanker) im Untergrund des Hanges H, während diese Fixierung das untere Abspannseil 33 im unteren Bereich (Stützenfuß 26) der Stütze 25 übernimmt. Wie Fig. 1 verdeutlicht, kann in jeder dieser Abspannseilanordnungen 32, 33 ein Bremselement bzw. eine Energiedissipationsvorrichtung eingeschaltet sein, die in Fig. 1 durch den Block 35 symbolisiert ist und die gemäß den zuvor erläuterten Ausführungsformen der erfindungsgemäßen der erfindungsgemäßen Dissipationsvorrichtung ausgebildet sein kann.

Eine entsprechende Fixierung der oberen und unteren Tragseile (die in Fig. 1 nicht dargestellt ist) sowie der Mittelseile, kann über eine Energiedissipationsvorrichtung 36 (auch Energieabsorbierungsstruktur oder Seilbremse genannt) erfolgen, die ebenfalls entsprechend den Prinzipien der vorliegenden Erfindung, die nachfolgend anhand der Fig. 1A bis 5B erläutert werden, ausgebildet sein kann. Hierbei ist es möglich, in jedes der einzelnen Seile 27, 28, 29, 32 bzw. 33 eine Dissipationsvorrichtung 1 einzuschalten, oder mehrere Seile (wie z.B. die Seile 29 und 32, 33) einer derartigen Dissipationsvorrichtung 1 zuzuordnen.

Aus einer Zusammenschau der Fig. 1A und 1B ergibt sich der Aufbau der erfindungsgemäßen Vorrichtung 1 zur Dissipation bzw. Aufnahme von in ein Seil 3 durch auf das Seil 3 wirkende Zugkräfte eingebrachter Energie.

Die Vorrichtung 1 weist zunächst einen deformierbaren Materialstreifen 2 auf, der langgestreckt ist und eine Längsachse L sowie eine wählbare Länge LA aufweist. Die Länge LA des Materialstreifens 2 sowie seine Materialstärke können je nach Anwendungsfall an die aufzunehmenden Kräfte bzw. Energien angepasst werden.

Der Materialstreifen 2 weist einen Einführabschnitt 2A auf, der in seiner Form an einen Verformungsspalt 7 einer Verformungseinrichtung 4 angepasst ist. Hierbei wird der Verformungsspalt 7 von zwei Verformungselementen 5 und 6 begrenzt, die in einem wählbaren Abstand A zueinander in der Verformungseinrichtung 4 angeordnet werden können. Bei der in den Fig. 1A und 1B dargestellten Ausführungsform ist der Verformungsspalt 7 geradlinig ausgebildet und die Verformungselemente 5 und 6 sind als drehbare Walzen bzw. feststehende, vorzugsweise zylindrische Zapfen bzw. Bolzen ausgebildet. Sind die Verformungselemente 5, 6 als drehbare Walzen ausgebildet, ergibt sich der Vorteil, dass kein Gleiten auf den Rollen sondern ein Walzen erfolgt.

Die Verformungseinrichtung 4 weist hierfür zwei beabstandete Halteplatten 8 und 9 auf, die in ihrer Kontur bzw. Form ebenfalls an den jeweiligen Anwendungsfall anpassbar sind. Dies trifft natürlich ebenfalls auf die Materialstärke sowie die Materialart zu, so dass die Verformungseinrichtung 4 den jeweils aufzubringenden Kräften anpassbar ist.

Die Halteplatten 8 und 9 nehmen zwischen sich die beiden Verformungselemente 5 und 6 auf, die an ihren jeweiligen Endbereichen mit den Halteplatten 8 und 9 fest verbunden, beispielsweise verschweißt, oder drehbar verbunden sind.

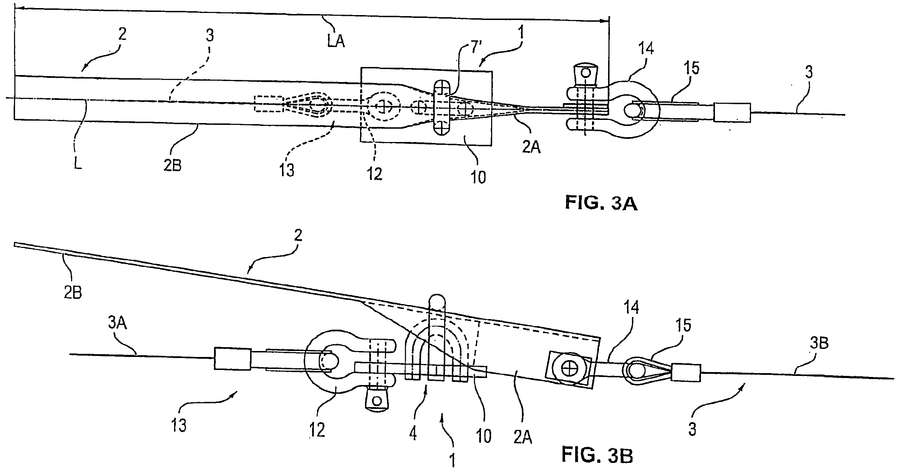

Ferner zeigen die Fig. 1A und 1B eine Anschlussplatte 10, die jeweils zwischen den Halteplatten 8 und 9 angeordnet und an diesen befestigt, beispielsweise verschweißt, ist. Die Anschlussplatte 10 weist eine Ausnehmung 11 auf, an der gemäß der Darstellung der Fig. 1A ein Anschlusselement 12, beispielsweise in Form eines Schäkels, befestigt werden kann, der wiederum an einem in Fig. 1A nur schematisch dargestellten Verankerungselement 13 befestigt ist, das üblicherweise mit dem Seil verbunden ist. Dieses Verankerungselement 13 kann aber auch als Zuganker ausgebildet sein, der zum Beispiel in einem Berghang verankert ist, falls das Seil 3 Teil einer Steinschlagverbauung ist, die mit Hilfe eines Netzes, das von einem bzw. mehreren Seilen, wie dem Seil 3 geführt ist, beispielsweise von einem Berg herabstürzende Felsbrocken auffängt. Die Vorrichtung 1 kann aber auch zwischen Seilen bzw. Seilabschnitten 3A, 3B (s. Fig. 3B) eingehängt werden.

Der Materialstreifen 2 weist ferner einen profilierten Abschnitt 2B auf, der im in den Fig. 1A und 1B dargestellten Beispielsfalle L-förmig ausgebildet ist. Wie eingangs erläutert, sind jedoch jedwede andere Art von verformbaren Profilen für den Materialstreifen 2 bei der Ausführungsform gemäß den Fig. 1A und 1B denkbar.

Wie die Darstellung der Fig. 1A verdeutlicht, ist der Eintrittsabschnitt 2A an einem Verbindungsstück (Schäkel) 14 festgelegt, an das entweder ein ortsfester Zuganker oder das Seil 3 angeschlossen werden kann, beispielsweise durch eine Seilschlaufe 15 oder andere geeignete Verbindungselemente, falls die Verformungseinrichtung 1 in ein Seil, bzw. zwischen dessen Seilabschnitte, eingebaut ist.

Die Vorrichtung 1 gemäß der Ausführungsform der Fig. 1A und 1B wirkt wie folgt:
Wenn beispielsweise durch das Auffangen eines Felsbrockens eine Hangverbauung, in das Seil 3, das Teil einer derartigen Hangverbauung sein kann, eine Zugkraft eingebracht wird, zieht das Seil 3 den Materialstreifen 2 durch den Verformungsspalt 7 der Verformungseinrichtung 4, wobei zuvor der an die Form des Verformungsspaltes 7 angepasste Eintrittsabschnitt 2A in den Verformungsspalt 7 eingeführt worden und mit dem Seil 3 verbunden worden ist. Da bei der Ausführungsform der Fig. 1A und 1B der Verformungsspalt 7 geradlinig ist, ist der Eintrittsabschnitt 2A dementsprechend abgeplattet, so dass ein Einführen des Abschnittes 2A in den Verformungsspalt 7 möglich wird. Beim Hindurchziehen des Materialstreifens 2 durch den Verformungsspalt 7 gelangt der profilierte Abschnitt 2B des Verformungsstreifens in den Verformungsspalt, der durch die Wirkung der Verformungselemente 5 und 6 den profilierten Abschnitt 2B abplattet und somit durch Erzeugung von Reibung und plastischer Verformung die in das Seil 3 eingebrachte Energie dissipiert. Das Hindurchziehen des Materialstreifens 2 durch den Verformungsspalt 7 erfolgt hierbei gänzlich ohne eine Umlenkung, was zu den zuvor erläuterten Vorteilen führt.

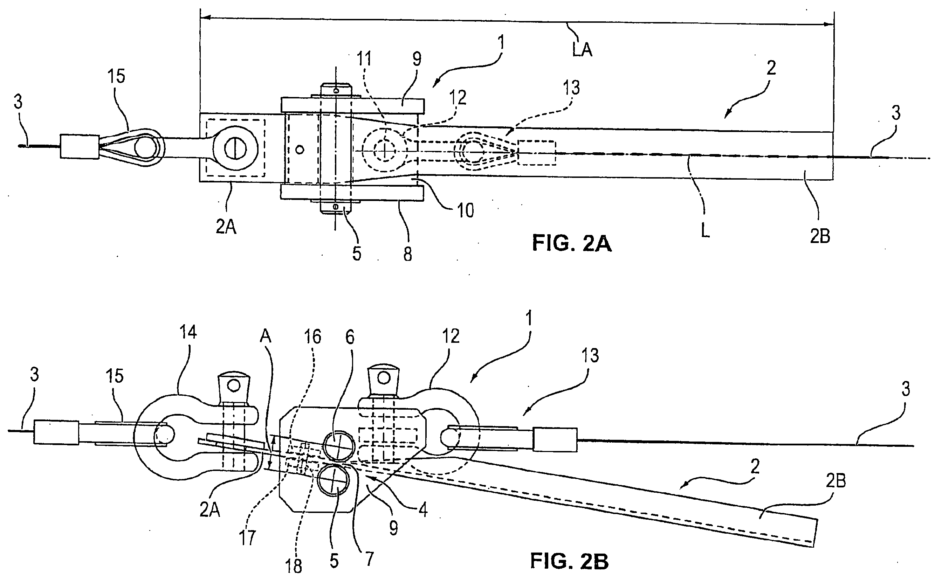

Gemäß den Fig. 2A und 2B ist eine zweite Ausführungsform der erfindungsgemäßen Vorrichtung 1 dargestellt, die im Wesentlichen der ersten Ausführungsform entspricht, so dass sämtliche dieser Ausführungsform entsprechende Teile mit den selben Bezugsziffern versehen sind. Daher kann insoweit auf die voranstehende Beschreibung Bezug genommen werden.

Die zweite Ausführungsform weist als ergänzende Merkmale zwei Laschen 16 und 17 auf, die zwischen den Halteplatten 8 und 9, mit diesen verbunden, angeordnet sind und durch die ein Sicherungsbolzen 18 hindurch verläuft, der ebenfalls eine Ausnehmung im Materialstreifen 2 durchgreift. Dadurch kann das Durchziehen des Materialstreifens 2 bis zu einem definierten Auslösewert, der die Kraft ist, bei dem der Sicherungsbolzen 18 durchgeschert wird, verhindert werden.

Bei der Ausführungsform gemäß den Fig. 3A und 3B sind sämtliche Teile, die in ihrer Struktur denjenigen der Fig. 1A und 1B entsprechen, mit denselben Bezugszeichen versehen.

Wie die Fig. 3A und 3B verdeutlichen, ist bei dieser Ausführungsform eine Dissipation der in das Seil 3 eingebrachten Energie dadurch möglich, dass ein ebener bzw. unkonturierter Materialstreifen 2 durch den konturierten Verformungsspalt 7' eine Kontur bzw. ein Profil aufgeprägt wird, was wiederum Reibung und eine plastische Verformung erzeugt, die der Energieaufnahme dient. Die in den Fig. 3A und 3B dargestellte Form des Verformungsspaltes 7' ist rein beispielhaft und kann dementsprechend zur Erzeugung anderer Profile (in diesem Fall ein U-Profil) abgeändert werden.

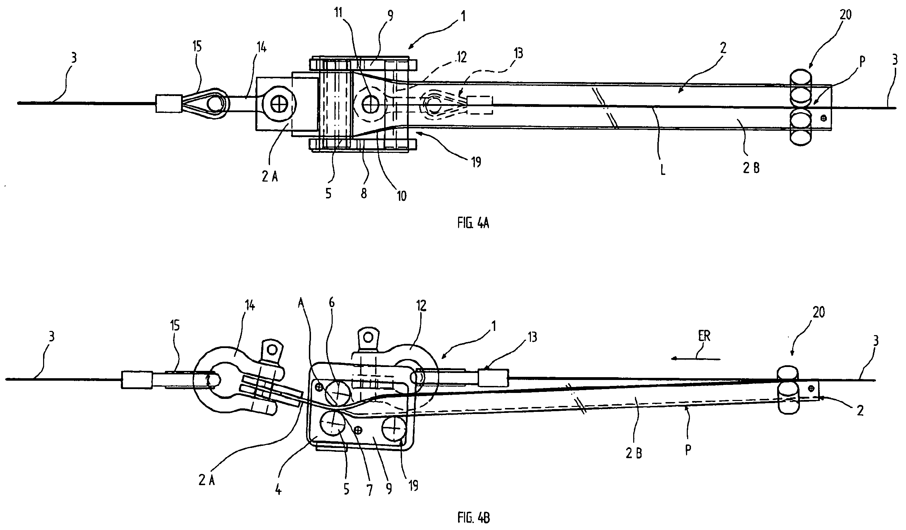

In den Fig. 4A und 4B ist entsprechend der Darstellung der Fig. 2A und 2B bzw. 3A und 3B eine vierte Ausführungsform der erfindungsgemäßen Vorrichtung 1 zur Energiedissipation (auch Energieabsorbierungselement oder Seilbremse genannt) dargestellt.

Alle Elemente, die den voranstehenden Ausführungsformen in Ausbildung und Funktion entsprechen, sind mit denselben Bezugszeichen versehen, so dass bezüglich deren Beschreibung auf die voranstehenden Textpassagen zu den Fig. 2A, 2B, 3A bzw. 3B verwiesen werden kann.

Die Ausführungsform gemäß den Fig. 4A und 4B weist als weiteres Merkmal eine Knickschutzeinrichtung 19 auf. Im dargestellten Ausführungsbeispiel ist diese Knickschutzeinrichtung 19 als feststehender Bolzen oder vorzugsweise als drehbare Rolle ausgebildet, die zwischen den Halteplatten 8 und 9 angeordnet ist und entweder an denen befestigt ist oder, im Falle drehbarer Rollen, drehbar zwischen diesen beiden Halteplatten 8 und 9 angeordnet ist. Hierfür ist es beispielsweise denkbar, eine feststehende Achse mit ihren Endbereichen an den Halteplatten 8 und 9 zu befestigen und auf diese feststehende Achse eine drehbare Rolle aufzustecken.

Die Knickschutzeinrichtung 19 ist gemäß der Darstellung der Fig. 4B beabstandet zur Verformungseinrichtung 4 angeordnet. Zur Erläuterung dieser Beabstandung ist in Fig. 4B die Einzugsrichtung des Materialstreifens 2 in die Verformungseinrichtung 4 mit dem Pfeil ER dargestellt. Dementsprechend ist, gesehen in dieser Richtung ER, die Knickschutzeinrichtung 19 vor der Verformungseinrichtung 4 angeordnet. Dies bedeutet, dass der unverformte Profilabschnitt 2B auf der Knickschutzeinrichtung 19 abgestützt wird, so dass beim Hindurchziehen des Materialstreifens 2 durch die Verformungsrichtung 4 ein Abknicken des noch unverformten Profilabschnittes 2B, gemäß der in Fig. 4B gewählten Darstellung nach unten in Fig. 4B, vermieden werden kann. Ein Vermeiden eines derartigen Abknickens ist vorteilhaft, damit beim Hindurchziehen des Materialstreifens 2 durch die Verformungseinrichtung 4 der unverformte Profilabschnitt 2B nicht so weit wegklappt, dass ein Hindurchziehen des Materialstreifens durch die Verformungseinrichtung 4 aufgrund der dann auftretenden Kräfte unmöglich gemacht werden würde bzw. erheblich erschwert würde.

Wie die Ausführungsform gemäß den Fig. 4A und 4B ferner verdeutlicht, ist am Ende des Profilabschnittes 2B ein Endanschlag 20 vorgesehen. Dieser Endanschlag 20 kann durch das Aufschweißen von einem oder mehrerer Vorsprünge auf den Innenseiten bzw. Außenseiten des Profilabschnittes 2B realisiert werden und verhindert, dass der Materialstreifen 2 aus der Vorrichtung 1 herausgezogen wird, da der Anschlag 20 durch Anlage an der Verformungseinrichtung 4 ein derartiges vollständiges Herausziehen des Materialstreifens 2 verhindert.

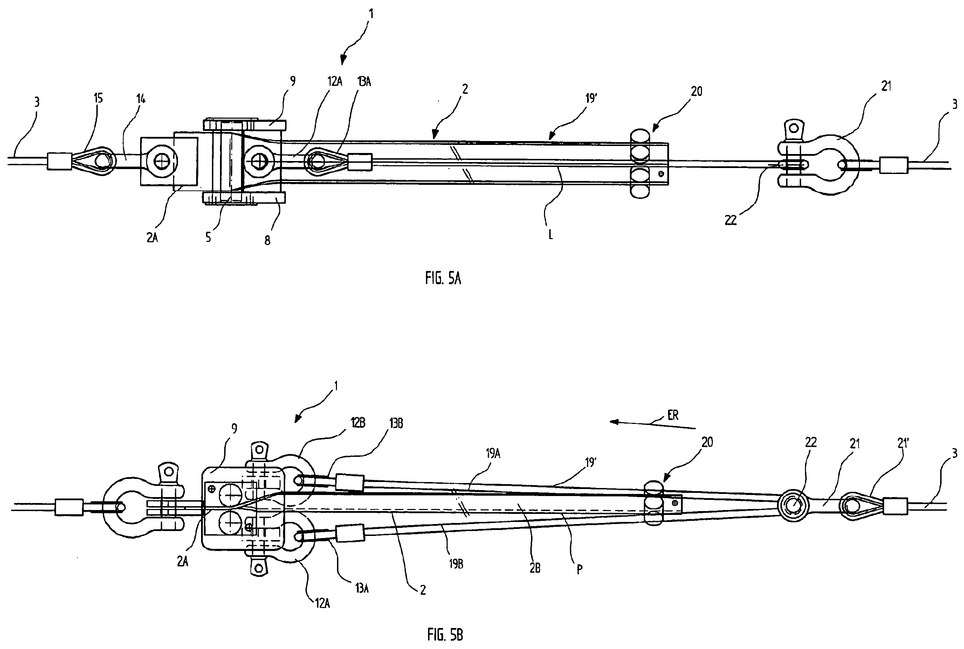

In den Fig. 5A und 5B ist eine fünfte Ausführungsform der erfindungsgemäßen Vorrichtung dargestellt, die, wie die Ausführungsform gemäß Fig. 4A und 4B eine Knickschutzeinrichtung aufweist, die aufgrund der andersartigen Ausbildung in den Fig. 5A und 5B mit dem Bezugszeichen 19' gekennzeichnet ist.

Alle übrigen Teile, die den vorhergehenden Ausführungsformen entsprechen, sind wiederum mit denselben Bezugsziffern versehen.

Die Knickschutzeinrichtung 19' weist, wie eine Zusammenschau der Fig. 5A und 5B verdeutlicht, zwei Schäkel 12A und 12B auf, die, gemäß Fig. 5B, jeweils an Seitenbereichen der Vorrichtung 1 angreifen und jeweils über Verbindungselemente 13A, 13B (hier: Seilschlaufen) mit Abschnitten 19A und 19B einer Seilstruppe verbunden sind. Diese Seilstruppe 19A, 19B ist über einen Verbindungsring 22, in dem die Abschnitte 19A und 19B zusammenlaufen, mit einem Schäkel 21 verbunden, der wiederum über eine Seilschlaufe 21' oder Ähnliches mit dem Seil 3 verbunden ist, wie sich dies aus einer Zusammenschau der Fig. 5A und 5B ergibt. Durch diese Anordnung wird ein Abknicken bzw. Wegklappen des Profilabschnittes 2B des Materialstreifens 2 verhindert, da dieser, wie sich insbesondere aus der Darstellung der Fig. 5B ergibt, zentriert wird und dementsprechend ein Wegklappen bzw. Abknicken vermieden wird.

Als weitere Alternative zu den zuvor erläuterten Knickschutzeinrichtungen 19 und 19', die allerdings in den Figuren nicht dargestellt ist, wäre es denkbar, das Ende des Profilabschnittes 2B auf geeignete Art und Weise mit dem Seil 3 zu verbinden, beispielsweise über einen Schäkel in das Seil einzuhängen.

Nachzutragen ist, dass alle zuvor erläuterten Ausführungsformen der erfindungsgemäßen Vorrichtung 1 zur Energiedissipation mit Materialstreifen 2, 2' versehen sind, deren jeweilige Profilabschnitte 2B, bis auf das Vorsehen des Anschlages 20, glattflächig, also ohne das Vorsehen irgendwelcher Vorsprünge, auszubilden.

Neben der voranstehenden schriftlichen Offenbarung der Erfindung wird hiermit explizit auf deren zeichnerische Darstellung in den Fig. 1 bis 5B der Zeichnung Bezug genommen.

### Bezugszeichenliste

- 1: Vorrichtung zur Energiedissipation
- 2, 2': Materialstreifen
- 2A: Einführabschnitt
- 2B: Profilabschnitt
- 3: Seil
- 4: Verformungseinrichtung
- 5, 6: Verformungselemente
- 7, 7': Verformungsspalt
- 8, 9: Halteplatten
- 10: Anschlussplatte
- 11: Ausnehmung
- 12, 12A, 12B: Anschlusselement / Schäkel
- 13, 13A, 13B: Verankerungs-/Verbindungselement / Zuganker / Schäkel / Seilschlaufe
- 14: Anschlusselement / Schäkel
- 15: Verbindungselement / Seilschlaufe
- 16,17: Laschen
- 18: Sicherungsbolzen
- 19, 19': Knickschutzeinrichtung
- 19A, 19B: Abschnitte einer Seilstruppe
- 20: Anschlag
- 21: Schäkel
- 21': Seilschlaufe zur Verbindung mit dem Schäkel 21
- 23: Schutzverbauung
- 24: Netz
- 25: Träger
- 26: Stützenfuß
- 26': Stützenkopf
- 27: obere Tragseilanordnung
- 28: untere Tragseilanordnung
- 29: Mittelseilanordnung
- 30, 31: Seilführungselemente (Schäkel)
- 32, 33: obere bzw. untere Abspannseilanordnung
- 34, 37: Befestigungselemente (Felsanker)
- 35, 36: Vorrichtung zur Energiedissipation (Seilbremse, Energieabsorbierungselement)
- L: Längsachse
- LA: Länge
- A: Abstand
- P: Profil
- H: Hang
- ER: Einzugsrichtung

## Patentansprüche

1. Schutzverbauung mit einer Vorrichtung (1) zur Energiedissipation, die aufweist:
- einen deformierbaren langgestreckten, eine Längsachse (L) aufweisenden Materialstreifen (2), der in ein auf Zug beanspruchtes Seil (3) eingebaut ist; und
- eine Verformungseinrichtung (4), die mit dem Materialstreifen (2) zusammen wirkt,
- wobei der Materialstreifen entweder (2) ein Profilstab ist oder ein unprofilierter Materialstreifen, welcher durch die Verformungseinrichtung profiliert wird und beim Aufbringen einer Zugkraft auf das Seil (3) verformbar ist, **dadurch gekennzeichnet,**
- **dass** der Materialstreifen (2) entlang seiner Längsachse (L) geradlinig durch die Verformungseinrichtung (4) hindurchführbar ist, und
- **dass** die Verformungseinrichtung (4) zwei Verformungselemente (5, 6) in Form drehbarer Walzen aufweist, die in einem wählbaren Abstand (A) zueinander positionierbar sind und dabei einen geradlinig ausgebildeten Verformungsspalt (7) begrenzen.

2. Schutzverbauung nach Anspruch 1, **gekennzeichnet durch** eine Knickschutzeinrichtung (19; 19'), die, in Einzugsrichtung (ER) des Materialstreifens (2) in die Verformungseinrichtung (4) gesehen, vor der Verformungseinrichtung (4) angeordnet ist.

3. Schutzverbauung nach Anspruch 1 oder 2, **dadurch gekennzeichnet, dass** die Verformungseinrichtung (4) zwei beabstandete Halteplatten (8, 9) aufweist, an denen die Enden der Verformungselemente (5 bzw. 6) befestigt sind.

4. Schutzverbauung nach Anspruch 3, **dadurch gekennzeichnet, dass** zwischen den Halteplatten (8, 9) eine Anschlussplatte (10) angeordnet ist, die an den Halteplatten (8, 9) befestigt ist.

5. Schutzverbauung nach Anspruch 4, **dadurch gekennzeichnet, dass** die Anschlussplatte (10) mit einer Ausnehmung (11) versehen ist.

6. Schutzverbauung nach einem der Ansprüche 2 bis 5, **dadurch gekennzeichnet, dass** die Knickschutzeinrichtung (19) als Führungsrolle ausgebildet ist.

7. Schutzverbauung nach einem der Ansprüche 2 bis 5, **dadurch gekennzeichnet, dass** die Knickschutzeinrichtung (19') als Seilstruppenanordnung (12A, 12B, 13A, 13B, 19A, 19B, 22, 21, 21') ausgebildet ist.

8. Schutzverbauung nach einem der Ansprüche 1 bis 7, **gekennzeichnet durch** eine Stützstruktur (25).

9. Schutzverbauung nach Anspruch 8, **gekennzeichnet durch** ein Netz (24), das über eine obere Tragseilanordnung (27) und eine untere Tragseilanordnung (28) an der Stützstruktur (25) geführt ist.

10. Schutzverbauung nach einem der Ansprüche 1 bis 9, **dadurch gekennzeichnet, dass** der Materialstreifen (2; 2') aus Aluminium oder Stahl aufgebaut ist.

11. Schutzverbauung nach einem der Ansprüche 1 bis 10, **dadurch gekennzeichnet, dass** die Verformungselemente (5, 6) mit einer reibungsmindernden Beschichtung versehen sind.

12. Schutzverbauung nach einem der Ansprüche 1 bis 11, **dadurch gekennzeichnet, dass** der Materialstreifen (2) glattflächig ausgebildet ist.

13. Schutzverbauung nach einem der Ansprüche 1 bis 12, **dadurch gekennzeichnet, dass** die Verformungseinrichtung (4) einen von zwei Laschen (16, 17) gehaltenen Sicherungsbolzen (18) aufweist, der eine Ausnehmung des Materialstreifens (2) durchgreift.

14. Schutzverbauung nach einem der Ansprüche 1 bis 13, **dadurch gekennzeichnet, dass** die Verformungseinrichtung (4) mit einem ortsfesten Verankerungselement (13) verbunden ist und über den Materialstreifen (2, 2') mit dem Seil (3) verbunden ist.

15. Schutzverbauung nach einem der Ansprüche 1 bis 13, **dadurch gekennzeichnet, dass** die Verformungseinrichtung (4) in ein Seil (3) eingebaut ist, wobei sie an einem Ende über eine Verbindungseinrichtung (12, 13) mit einem ersten Seilabschnitt (3A) und am anderen Ende über den Materialstreifen (2) mit einem zweiten Seilabschnitt (3B) des Seils (3) verbunden ist.

## Claims

1. Protection structure having a device (1) for energy dissipation, comprising:
- a deformable elongated material strip (2) having a longitudinal axis (L), said material strip being integrated in a rope (3) that can be tensioned; and
- a deformation unit (4), which interacts with the material strip (2),
- wherein the material strip (2) is one of a profile bar and a none-profiled material strip which is profiled by the deformation unit, and is deformable by applying a tension to the rope (3), **characterized in that**
- said material strip (2), along the longitudinal axis thereof, is fed linearly through the deformation unit (4), and
- said deformation unit (4) comprises two deformation elements (5, 6) in the form of rotatable rollers which are positionable to each other in a selectable distance (A) and thereby defining a linearly formed deformation gap (7).

2. Protection structure according to claim 1, **characterized in that** a bent protection means (19; 19') which is located in front of the deformation unit (4) when viewed in a feed direction (ER) of said material strip (2) into the deformation unit (4).

3. Protection structure according to claim 1 or 2, **characterized in that** said deformation unit (4) comprises two spaced holding plates (8, 9) to which the ends of the deformation elements (5, 6, respectively) are attached.

4. Protection structure according to claim 3, **characterized in that** a connection plate (10) attached to the holding plates (8, 9) is located between the holding plates (8, 9).

5. Protection structure according to claim 4, **characterized in that** the connection plate (10) is provided with a recess (11).

6. Protection structure according to any of claims 2 to 5, **characterized in that** the bent protection means (19) is formed as a guiding roller.

7. Protection structure according to any of claims 2 to 5, **characterized in that** the bent protection means (19') is formed as a rope strap structure (12A, 12B, 13A, 13B, 19A, 19B, 22, 23, 21').

8. Protection structure according to any of claims 1 to 7, **characterized by** a support structure (25).

9. Protection structure according to claim 8, **characterized by** a net (24) that is guided by an upper suspension rope structure (27) and a lower suspension rope structure (28) at said support structure (25).

10. Protection structure according to any of claims 1 to 9, **characterized in that** the material strip (2; 2') is made from aluminum or steel.

11. Protection structure according to any of claims 1 to 10, **characterized in that** the deformation elements (5, 6) are provided with a friction lowering coating.

12. Protection structure according to any of claims 1 to 11, **characterized in that** the material strip (2) is formed smoothly.

13. Protection structure according to any of claims 1 to 12, **characterized in that** the deformation unit (4) comprises a securing bold (18) held by two flaps (16, 17), which is formed to penetrate a recess of the material strip (2).

14. Protection structure according to any of claims 1 to 13, **characterized in that** the deformation unit (4) is connected to a stationary anchoring element (13) and is connected to the rope (3) via the material strip (2, 2').

15. Protection structure according to any of claims 1 to 13, **characterized in that** the deformation unit (4) is integrated in a rope (3), wherein one end of the unit is connected to a first rope section (3A) via a connection means (12, 13) and the other end is connected to the second rope section (3B) of the rope (3) via the material strip (2).

## Revendications

1. Structure de protection avec un dispositif (1) de dissipation d'énergie qui présente :
- une bande de matériau (2) déformable, étirée en longueur, présentant un axe longitudinal (L), qui est intégrée dans un câble (3) sollicité en traction; et
- un dispositif de déformation (4) qui agit conjointement avec la bande de matériau (2),
- la bande de matériau (2) étant soit une barre profilée soit une bande de matériau non profilée qui est profilée par le dispositif de déformation et pouvant être déformée lors de l'application d'une force de traction sur le câble (3), **caractérisée en ce que**
- la bande de matériau (2) peut passer le long de son axe longitudinal (L) en ligne droite au travers du dispositif de déformation (4) et
- le dispositif de déformation (4) présente deux éléments de déformation (5, 6) sous la forme de rouleaux rotatifs qui peuvent être positionnés à une distance pouvant être choisie (A) l'un par rapport à l'autre et délimitent une fente de déformation (7) réalisée de manière linéaire.

2. Structure de protection selon la revendication 1, **caractérisée par** un dispositif de protection au flambage (19 ; 19') qui est agencé, vu dans le sens de rentrée (ER) de la bande de matériau (2) dans le dispositif de déformation, (4), devant le dispositif de formation (4).

3. Structure de protection selon la revendication 1 ou 2, **caractérisée en ce que** le dispositif de déformation (4) présente deux plaques de retenue (8, 9) espacées, sur lesquelles les extrémités des éléments de déformation (5 ou 6) sont fixées.

4. Structure de protection selon la revendication 3, **caractérisée en ce qu'**une plaque de raccordement (10) est agencée entre les plaques de retenue (8, 9), laquelle est fixée sur les plaques de retenue (8, 9).

5. Structure de protection selon la revendication 4, **caractérisée en ce que** la plaque de raccordement (10) est pourvue d'un évidement (11).

6. Structure de protection selon l'une quelconque des revendications 2 à 5, **caractérisée en ce que** le dispositif de protection au flambage (19) est réalisé en tant que rouleau de guidage.

7. Structure de protection selon l'une quelconque des revendications 2 à 5, **caractérisée en ce que** le dispositif de protection au flambage (19') est réalisé en tant qu'agencement d'élingues (12A, 12B, 13A, 13B, 19A, 19B, 22, 21, 21').

8. Structure de protection selon l'une quelconque des revendications 1 à 7, **caractérisée par** une structure d'appui (25).

9. Structure de protection selon la revendication 8, **caractérisée par** un réseau (24) qui est guidé par le biais d'un agencement de câble porteur supérieur (27) et d'un agencement de câble porteur inférieur (28) sur la structure d'appui (25).

10. Structure de protection selon l'une quelconque des revendications 1 à. 9, **caractérisée en ce que** la bande de matériau (2 ; 2') est réalisée en aluminium ou en acier.

11. Structure de protection selon l'une quelconque des revendications 1 à 10, **caractérisée en ce que** les éléments de déformation (5, 6) sont pourvus d'un revêtement réduisant le frottement.

12. Structure de protection selon l'une quelconque des revendications 1 à 11, **caractérisée en ce que** la surface de la bande de matériau (2) est réalisée de manière lisse.

13. Structure de protection selon l'une quelconque des revendications 1 à 12, **caractérisée en ce que** le dispositif de déformation (4) présente un boulon de fixation (18) maintenu par deux languettes (16, 17), qui recouvre un évidement de la bande de matériau (2).

14. Structure de protection selon l'une quelconque des revendications 1 à 13, **caractérisée en ce que** le dispositif de déformation (4) est relié à un élément d'ancrage (13) fixe et par le biais de la bande de matériau (2, 2') au câble (3).

15. Structure de protection selon l'une quelconque des revendications 1 à 13, **caractérisée en ce que** le dispositif de déformation (4) est intégré dans un câble (3), ce dispositif étant relié à une extrémité par le biais d'un dispositif de liaison (12, 13) à une première section de câble (3A) et à l'autre extrémité par le biais de la bande de matériau (2) à une seconde section de câble (3B) du câble (3).
